# EUROPEAN PATENT SPECIFICATION

(11) **EP 1 759 098 B1**
(45) Date of publication and mention of the grant of the patent: **29.02.2012**
(21) Application number: 05752867.1
(22) Date of filing: 21.06.2005
(51) Int. Cl.: F01N 3/20, F01N 3/08, F02M 43/04, B01D 53/90, F02M 25/00, F02M 27/04, F02M 25/07

(54) **DEVICE AND METHOD FOR SUPPLYING FUEL OR REDUCING AGENT, AND PLASMA TORCH**
VORRICHTUNG UND VERFAHREN ZUR KRAFTSTOFFZUFUHR ODER REDUKTIONSMITTELZUFUHR UND PLASMABRENNER
DISPOSITIF ET PROCÉDÉ D'INJECTION DE COMBUSTIBLE OU D'AGENT RÉDUCTEUR ET CHALUMEAU AU PLASMA

(30) Priority: 25.06.2004 JP 2004188614
(43) Date of publication of application: 07.03.2007
(73) Proprietor: Toyota Jidosha Kabushiki Kaisha, Toyota-shi, Aichi 471-8571 (JP)
(72) Inventor: HIRATA, Hirohito, c/o TOYOTA JIDOSHA KABUSHIKI KAISHA, Toyota-shi, Aichi, 4718571 (JP); MATSUMURA, Eriko, c/o TOYOTA JIDOSHA KABUSHIKI KAISHA, Toyota-shi, Aichi, 4718571 (JP); ISHIBASHI, Kazunobu, c/o TOYOTA JIDOSHA KABUSHIKI KAISHA, Toyota-shi, Aichi, 4718571 (JP)
(74) Representative: TBK
(86) International application number: PCT/JP2005/011695
(87) International publication number: WO 2006/001404

(56) References cited:
- DE-A1- 19 510 804
- JP-A- 9 049 432
- JP-A- 2001 317 360
- US-A- 6 138 454
- US-A1- 2004 081 592
- US-B1- 6 655 130
- SOWMAN C: "EMISSIONS AFFECT DEVELOPMENT" MOTOR-SHIP, REED BUSINESS PUBLISHING, SUTTON, SURREY, GB, vol. 77, no. 913, 1 August 1996 (1996-08-01), pages 31-32,34, XP000620097 ISSN: 0027-2000

## Description

### TECHNICAL FIELD

The present invention relates to an device and a method for supplying a fuel or a reducing agent, and to a plasma torch which can be used for the device and method.

### RELATED ART

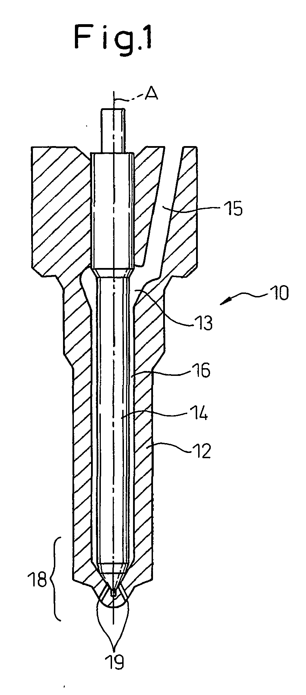

Fig. 1 shows a conventional injector for injecting a fuel directly to a combustion chamber of an internal engine. This injector 10 comprises a nearly cylindrical nozzle 12 having a hollow space 13 therein, and a nearly columnar needle valve 14 which slides (moves) in the hollow space of the nozzle 12. The nozzle 12 and the needle valve 14 are disposed such that their axial lines A run coaxially. Also, in the nozzle 12, a supply passage 15 communicating with the hollow space 13 is provided. The supply passage 15 is connected to a fuel source (not shown), and high-pressure fuel is supplied into the hollow space 13 through the supply passage 15. The fuel supplied flows to the distal end portion 18 of the nozzle 12 through an annular path 16 between the needle valve 14 and the inner wall surface of the nozzle 12 and is injected from an injection hole 19 at the distal end portion 18 of the nozzle 12. In this injector, the inlet of the injection hole 19 is closed or opened by sliding the needle valve 14 in the hollow space 13 to bring the distal end of the needle valve 14 into contact with the inner wall surface in the nozzle distal end portion 18, whereby the injection of a fuel from the injection port 19 is controlled.

Such an injector is used also for injecting a fuel into an exhaust pipe where an exhaust gas from an internal engine is flowing. This is disclosed in Japanese Unexamined Patent Publication (Kokai) No. 2001-159309. Japanese Unexamined Patent Publication (Kokai) No. 2001-159309 proposes generation of an electric discharge in the exhaust pipe by using a discharging device disposed upstream a catalyst and inject a reducing agent on the more upstream side of the discharging device. According to this technique, the oxidation from NO into NO₂ in the discharging device can be accelerated due to the presence of hydrocarbon (HC). Also, Japanese Unexamined Patent Publication (Kokai) No. 2001-159309 proposes injection of a reducing agent upstream of a catalyst and generation of a discharge plasma on the catalyst. According to this technique, the reaction on the catalyst is accelerated and the purification activity can be enhanced.

Use of a discharge plasma for purifying an exhaust gas of an automobile is described also in Japanese Unexamined Patent Publication (Kokai) No. 5-321634. Japanese Unexamined Patent Publication (Kokai) No. 5-321634 relates to a PM removing device of collecting a particulate matter (hereinafter referred to as a "PM") in an exhaust gas from a diesel engine by a PM trap and regenerating the PM trap by supplying fresh air thereto. In this publication, it has been proposed to inject water into the fresh air supplied to the PM trap, generate an OH radical by providing corona discharge to the fresh air containing water, and accelerate the burning of PM trapped in the PM trap by the effect of the OH radical generated.

With respect to the use of a discharge plasma for purifying an exhaust gas of automobiles, Japanese Unexamined Patent Publication (Kokai) No. 6-343820 has proposed to supply water vapor to a plasma generating device and supply the obtained water-vapor plasma gas into an exhaust gas, whereby harmful components in the exhaust gas are oxidized and rendered harmless. In this publication, it is disclosed that active chemical species such as O, OH, H, H₂O and O₃ are obtained by supplying a water vapor to the plasma generating device.

Japanese Patent Publication (Kokai) No. 2002-61556, discloses an injection nozzle used for injecting gasoline to a combustion chamber of an internal combustion engine. In the injection nozzle, an electric discharge is generated in a passage for fuel, thereby electrically charging the fuel before injecting it to a combustion chamber. The patent publication document states that this charging promotes an ionization of the fuel when the fuel is mixed with air and, therefor, results in little generation of NOₓ, CO, etc upon combustion.

As described above, an injector for injecting a fuel or a reducing agent is being used for various uses. However, in any of these uses, particularly at low temperatures, there is a problem that the fuel or reducing agent is not satisfactorily vaporized by mere injection.

In the case where the fuel is not satisfactorily vaporized when the fuel is injected to a combustion chamber of a direct injection-type internal combustion engine, mixing, between the fuel and air, proceeds insufficiently and this tends to cause incomplete combustion of fuel and generation of PM.

In the case where the reducing agent is not satisfactorily vaporized when the reducing agent is injected to an exhaust pipe in which an exhaust gas from an internal combustion engine is flowing, diffusion to a catalyst and contact with a catalyst may become insufficient and then fail in effecting adequate purification, or the reducing agent may be unreacted and as-is released into air.

Use of a plasma for the purification of an exhaust gas is conventionally known as described in Japanese Unexamined Patent Publication (Kokai) No. 2001-159309, However, when a fuel is injected to an exhaust gas and a plasma is provided during the subsequent treatment of exhaust gas as in Japanese Unexamined Patent Publication (Kokai) No. 2001-159309, the exhaust gas flow as a whole is converted into a plasma state and, therefore, a relatively large energy is required for generating a plasma or the plasma density is decreased.

Document JP 2001-317360 A treats the problem to provide a diesel engine reducing a particulate material (PM) in an exhaust gas by creating a condition to accelerate a combustion reaction in a combustion chamber or the like by utilizing plasma, and shortening an afterburning period peculiar to the diesel engine. To solve this problem a diesel engine is provided with a combustion chamber and a fuel injection nozzle injecting a fuel toward the combustion chamber and the fuel from the fuel injection nozzle in burned in the combustion chamber. The diesel engine is provided with discharge electrodes for generating electric discharges in the combustion chamber. The injector is located between two electrodes for generating plasma from an air-fuel mixture.

Document JP 09 049432 A discloses a plasma spark plug in a direct injection-type internal combustion engine. The plasma spark plug is fixed on a cylinder head. Fuel is converted into a gas which gas is then put in a high-temperature high-plasma state. The plasma is jetted out at a high speed into a combustion chamber from an orifice. In one embodiment, a fuel-air mixture is used for the conversion.

Document US 2004/0081592 A1 discloses a device and method for a post-engine introduction of an auxiliary agent in an exhaust-gas stream. According to this document, plasma is generated from a fuel-air mixture.

It is the object of the invention, to provide a device and a method for supplying a fuel or a reducing agent, wherein a fuel or reducing agent supplied by injection can be vaporized even under the condition of not allowing for sufficient vaporization of the merely injected fuel or reducing agent, and/or a fuel or reducing agent having high reactivity can be relatively easily provided.

The object of the invention is achieved by a device for supplying a fuel or a reducing agent according to claim 1 or by a method according to claim 8, respectively. Advantageous embodiments are carried out according to the dependent claims.

### DISCLOSURE OF THE INVENTION

A device for supplying a fuel or a reducing agent of the present invention comprises a plasma torch for converting a gas into a plasma and supplying the plasma, and an injector for injecting a fuel or a reducing agent to a region whereto the plasma is supplied.

The "plasma torch" as used in the present invention means a plasma generating device of converting a gas supplied thereto into a plasma and supplying the plasma, particularly a plasma generating device capable of jetting out the plasma from the distal end part thereof.

According to the device for supplying a fuel or a reducing agent of the present invention, the fuel or reducing agent injected from an injector can be converted into a low molecular weight component having high reactivity through radical formation and cracking, and/or can be vaporized quickly even under a condition where satisfactory vaporization cannot be attained merely by injecting a fuel or reducing agent.

According to the device for supplying a fuel or a reducing agent of the present invention, a plasma can be generated only in the vicinity of an injection port of an injector for injecting a fuel or a reducing agent, namely, not in the entirety but only in a part of the space where the fuel or reducing agent is injected. Accordingly, the space to be converted into a plasma can be made to be relatively small, that is, a high plasma density can be obtained with a relatively small consumption of energy.

According to the device for supplying a fuel or a reducing agent of the present invention, the concentration of fuel or reducing agent in the plasma is decreased as compared with the case wherein a fuel or a reducing agent by itself is converted into a plasma and therefore, generation of soot can be suppressed.

In the device for supplying a fuel or a reducing agent of the present invention, the gas to be converted into a plasma is recirculated exhaust gas (EGR (exhaust gas recirculation) gas).

As recirculated exhaust gas is converted into a plasma and a fuel or a reducing agent can be injected to the plasma from an injector, the radical formation, cracking, vaporization and the like of fuel or reducing agent can be accelerated.

Particularly, since EGR gas is supplied to the plasma torch and converted into a plasma, the water content contained in the EGR gas can generate an OH radical and an O radical upon being converted into a plasma. Such a radical accelerates cracking and reforming, or is bonded to the terminal of a fuel or reducing agent molecular chain broken by the plasma, thereby preventing production of unsaturated hydrocarbon or suppressing generation of soot. The fuel or reducing agent reformed or decreased in molecular weight is a very active reducing agent and is preferred in many uses. Also, since EGR gas is supplied to the plasma torch and converted into a plasma, a tank or the like for storing a gas to be supplied to the plasma torch is advantageously not necessary, because the EGR gas can be obtained from the exhaust gas flow .

Since EGR gas is supplied to the plasma torch and converted into a plasma, this is advantageous in that the EGR gas has a relatively low oxygen concentration to cause less oxidation and consumption of the fuel or reducing agent, and that the EGR gas has a relatively stable water content concentration of, for example, about 5 to 10%.

In the device for supplying a fuel or a reducing agent of the present invention, the device may comprise a water supplying means for supplying water to a region whereto the plasma is supplied.

The water supplying means may be another injector for injecting water, but the injector for injecting a fuel or a reducing agent may work at the same time as the water supplying means for supplying water.

Water is converted into a plasma together with the fuel or reducing agent to produce an OH radical and an O radical, so that the cracking and reforming of the fuel or reducing agent can be accelerated and production of soot can be suppressed.

In the device for supplying a fuel or a reducing agent of the present invention, the plasma torch and the injector for injecting a fuel or a reducing agent can be separated.

The region where the plasma is supplied is separated from the injector, so that the injector can be prevented from deterioration due to plasma.

In the device for supplying a fuel or a reducing agent of the present invention, an injection nozzle of the injector can be disposed in the plasma torch and the gas to be converted into a plasma is passed to flow between the inner wall of the plasma torch and the injection nozzle of the injector.

Contact of the plasma with the fuel or reducing agent injected from the injector can be improved.

Also, a discharge plasma can be generated in the vicinity of the injection port of the injector by using the injection nozzle of the injector as a discharge electrode and by applying a voltage between the injection nozzle and an electrode coupled therewith to generate electric discharge.

Also, an inductively coupled plasma can be generated in the vicinity of the injection port by disposing an induction coil in the periphery of the injection port of the injector, supplying a high-frequency current from a high-frequency electric power source to the induction coil in the periphery of the injection port, generating a magnetic field in the vicinity of the injection port, and generating an eddy current.

In the device for supplying a fuel or a reducing agent of the present invention, the plasma can be a discharge plasma, and wherein when the EGR gas to be converted into a plasma is at a temperature less than a predetermined temperature, particularly at a temperature of less than 100°C, more particularly less than 120°C, the gas is not converted into a plasma at the plasma torch.

When the gas to be converted into a plasma is cooled to a low temperature, the water content contained in the gas is sometimes condensed to liquid water. In particular, since the EGR gas has a relatively high water content, when it is cooled during supply to the plasma torch, it may generate liquid water. In the case where the plasma torch for use in the present invention generates a plasma by discharging, if liquid water is present in the discharging portion, a short-circuit may occur and this may cause deterioration of the device. Therefore, in this case discharging is not performed when the temperature is less than a predetermined temperature, so that the device can be prevented from deterioration or the like.

In the device for supplying a fuel or a reducing agent of the present invention, when the oxygen concentration in the space to which the fuel or reducing agent is supplied exceeds a predetermined concentration, the gas may not be converted into a plasma at the plasma torch.

If the oxygen concentration is high in the space, to which the fuel or reducing agent is supplied when cracking and reforming of a fuel or reducing agent, particularly, a relatively light fuel or reducing agent such as gasoline, is caused by the plasma, a relatively large amount of fuel or reducing agent may be consumed there by the oxidation or combustion reaction. Accordingly, when the oxygen concentration in this space exceeds a predetermined concentration, for example, exceeds 10%, particularly 5%, discharging is not performed, whereby the fuel or reducing agent can be effectively utilized. This is particularly preferred in view of consumption of energy in the case where for the purification of an exhaust gas, the fuel or reducing agent is injected to an exhaust pipe.

In the method for supplying a fuel or a reducing agent of the present invention, a gas is converted into a plasma and supplied, and a fuel or reducing agent is injected to the plasma.

The plasma torch of the present invention converting a gas into a plasma and supplies the plasma to the vicinity of an injection port of an injector for injecting a fuel or a reducing agent.

According to the method for supplying a fuel or a reducing agent or the plasma torch of the present invention, the fuel or reducing agent supplied by injection can be converted to a low molecular weight component having high reactivity through radical formation and cracking, and/or can be vaporized quickly even if a fuel or reducing agent is not satisfactorily vaporized merely by injecting the fuel or reducing agent.

### BRIEF DESCRIPTION OF DRAWINGS

Fig. 1 is an enlarged cross-sectional view showing a conventional injector.
Fig. 2 is a cross-sectional view showing the concept of the device for supplying a fuel or a reducing agent of the present invention.
Fig. 3 is a schematic cross-sectional view showing one embodiment of the device for supplying a fuel or a reducing agent of the present invention utilizing a discharge plasma.
Fig. 4 is a schematic cross-sectional view showing another embodiment of the device for supplying a fuel or a reducing agent of the present invention utilizing a discharge plasma.
Fig. 5 is a schematic cross-sectional view showing still another embodiment of the device for supplying a fuel or a reducing agent of the present invention utilizing a discharge plasma.
Fig. 6 is a schematic cross-sectional view showing an injection nozzle for injecting fuel and water, which can be used in the device for supplying a fuel or a reducing agent of the present invention.
Fig. 7 is a schematic cross-sectional view showing one embodiment of the device for supplying a fuel or a reducing agent of the present invention utilizing an inductively coupled plasma.
Fig. 8 is a schematic cross-sectional view showing one embodiment of the device for supplying a fuel or a reducing agent of the present invention utilizing a microwave plasma.
Fig. 9 is a block diagram showing a supply mechanism for supplying air to a plasma torch according to a comparative example for better understanding the invention
Fig. 10 is a block diagram showing one embodiment of the supply mechanism for supplying an EGR gas to a plasma torch.
Fig. 11 is a schematic cross-sectional view showing a direct injection-type internal combustion engine where the device for supplying a fuel or a reducing agent of the present invention can be used.
Fig. 12 is a schematic cross-sectional view showing an exhaust gas purifying system where the device for supplying a fuel or a reducing agent of the present invention can be used.
Fig. 13 is a schematic cross-sectional view showing an experimental apparatus for performing cracking of a hydrocarbon molecule by a plasma.
Fig. 14 is a schematic cross-sectional view showing a nozzle used in the experimental apparatus shown in Fig. 13.

### BEST MODE FOR CARRYING OUT THE INVENTION

The present invention is specifically described below based on the embodiments shown in the Figures. Each Figure is a view showing the concept of the present invention but the present invention is not limited to these embodiments.

### <Device for Supplying Fuel or Reducing Agent of the Present Invention>

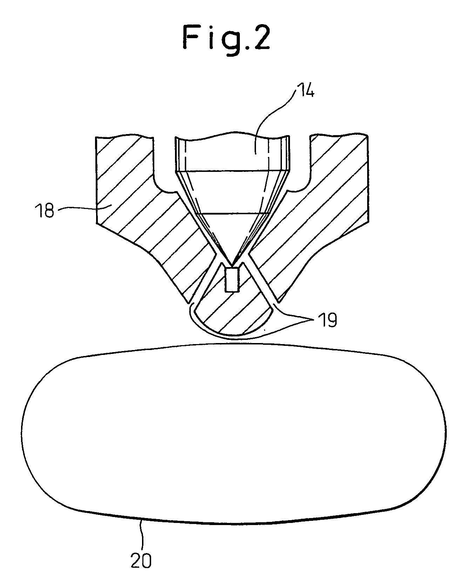

The device for supplying a fuel or a reducing agent of the present invention can be roughly described by referring to Fig. 2.

In the device for supplying a fuel or a reducing agent of the present invention, the fuel or reducing agent injected from an injector can be at least partially converted into a plasma. As shown in Fig. 2, this can be performed by injecting a fuel or a reducing agent from an injection port 19 positioned at the distal end portion 18 of an injection nozzle to a plasma region, particularly, a plasma region 20 in the vicinity of the injection port 19.

The plasma region can be formed by converting recirculated exhaust gas into a plasma, and then jetting out (supplying) the plasma to the vicinity of the injection port of an injector for injecting a fuel or a reducing agent.

The fuel or reducing agent injected by the device for supplying a fuel or a reducing agent of the present invention can be selected according to use but may be, for example, a hydrocarbon such as gasoline and light oil, an ether or an alcohol. Incidentally, the terms "fuel" and "reducing agent" are terms chosen according to the usage of the injector in use. Generally, the "fuel" is a term used for indicating a material supplied from the injector wherein the supplied material is intended to be explosively burned, and the "reducing agent" is a term used for indicating a material supplied from the injector wherein the supplied material is intended to be used for reducing other substances. Accordingly, these terms sometimes indicate the same object and can be used exchangeably with each other. More specifically, in some cases, a gasoline is injected as a "fuel" into a combustion chamber for generating power in an internal combustion engine and at the same time, a gasoline is injected as a "reducing agent" into an exhaust pipe for reducing NOₓ in the exhaust gas discharged from this internal combustion engine. Of course, the "fuel" as a power source for an internal combustion engine may be different from the "reducing agent" for the purification of an exhaust gas.

As for the injector used in the device for supplying a fuel or a reducing agent of the present invention, any injector can be used. For example, this injector may be a conventional injector 10 shown in Fig. 1 for injecting a fuel to a combustion chamber of an internal combustion engine.

In the case where, as shown in Fig. 2, a plasma region 20 is generated by a plasma torch in the region near the injection port 19 of an injector, this plasma region 20 in the vicinity of the injection port 19 is not the entirety but a part of a space such as exhaust pipe or combustion chamber where a fuel or a reducing agent is injected by an injector, and may be, for example, a region within 5 cm, particularly within 2 cm, more particularly within 1 cm, from the injection port 19.

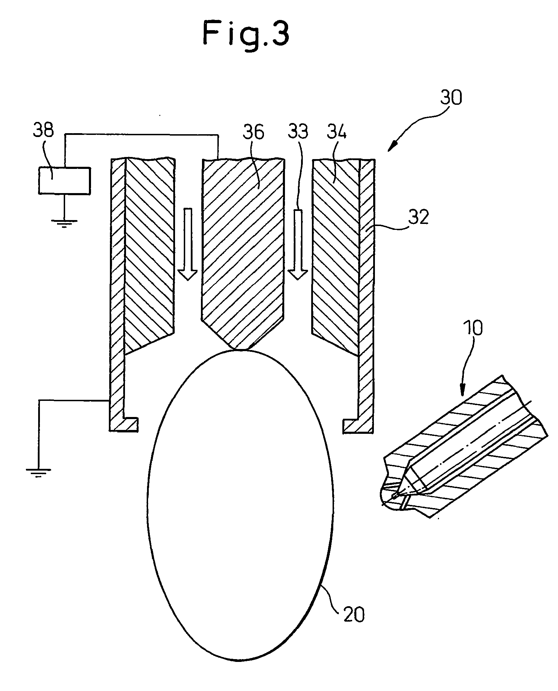

The device for supplying a fuel or a reducing agent of the present invention can have any mechanisms and may have, for example, mechanisms shown in Figs. 3 to 8.

### <Device for Supplying Fuel or Reducing Agent of the Present Invention Utilizing a Discharge Plasma>

The device for supplying a fuel or a reducing agent shown in Fig. 3 utilizes a discharge plasma. In the plasma torch 30 used in the device for supplying a fuel or a reducing agent shown in Fig. 3, a discharge electrode 36 is disposed on the central axis of an electrically conducting cylindrical duct 32 for passing a gas to be converted into a plasma, such as nitrogen, and an insulating material 34 is disposed between the duct 32 and the discharge electrode 36. The duct 32 and the discharge electrode 36 are respectively connected to a ground and an electric power source 38 to work as counter electrodes with each other. The duct 32 and the discharge electrode 36 either may be a cathode or an anode. Also, the duct 32 or the discharge electrode 36 may be grounded.

When using this device for supplying a fuel or a reducing agent, electric discharge is generated between the duct 32 and the discharge electrode 36 by the electric power source 38, whereby a gas 23 supplied through the flow-path in the plasma torch 30 is converted into a plasma. The fuel or reducing agent is injected from an injector 10 into a plasma region 20.

In Fig. 3, the duct is used as one electrode, but a separate electrode can be of course used as a counter electrode of the discharge electrode 36.

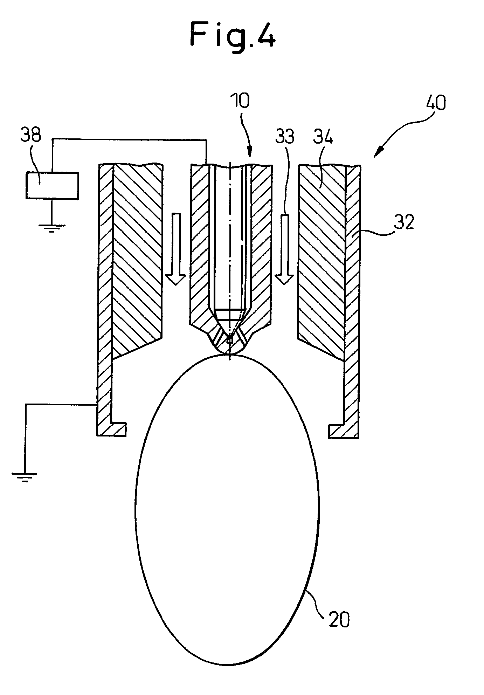

A mechanism shown in Fig. 4 may also be employed, where an injection nozzle of an injector 10 for injecting a fuel or a reducing agent is disposed in a plasma torch 30', a gas 33 to be converted into a plasma is passed between the inner wall of the plasma torch 30' and the injection nozzle of the injector 10, and the injection nozzle of the injector 10 is used as one electrode.

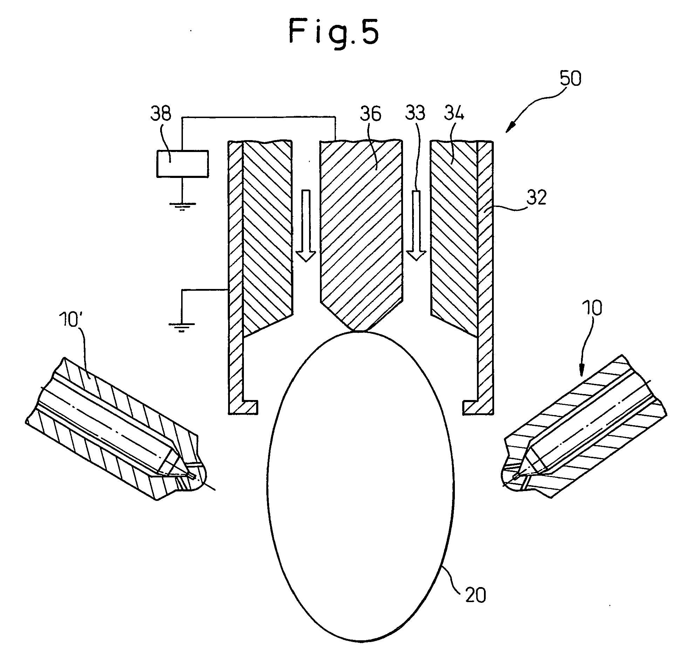

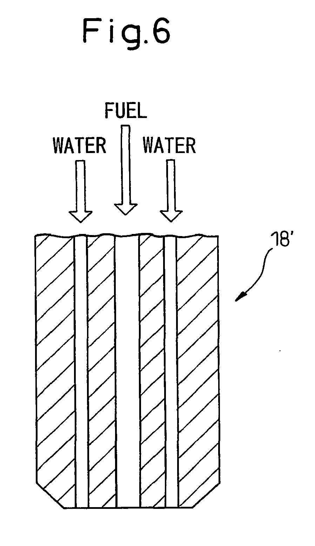

Also, in the case of further supplying water to the region where a plasma is generated, as shown in Fig. 5, an additional injector 10' for injecting water may be used. In this case, as shown in Fig. 6, a nozzle 18' having two coaxial paths and capable of injecting both a fuel or reducing agent and water may also be used in place of that of the injector 10 for injecting a fuel or a reducing agent.

In the plasma torch, the portion used as an electrode can be formed of a material which can work as a discharge electrode when a voltage is applied between electrodes. As for such a material, an electrically conducting material or a semiconductor material may be used, but a metal material such as copper, tungsten, stainless steel, iron and aluminum is preferred. Particularly, in the arc discharge, the electrode reaches a high temperature and therefore, a high-melting-point material such as tungsten is preferably used. Also, an insulating material may be disposed on such an electrically conducting or semiconductor material so as to generate barrier discharge.

The discharge plasma means a plasma generated by causing a high-energy electron produced by electric discharge between electrodes to collide with a gas molecule and thereby ionizing the gas molecule into a plus ion and a minus ion. For generating this discharge plasma, any discharge mode may be used, and arc discharge or corona discharge, such as barrier discharge, can be utilized.

In the case of generating a plasma in the plasma torch by using the arc discharge, the electric power source 38 can supply, for example, a voltage of 1 to 50 V and an electric current of 5 to 500 A. In this arc discharge, the electric discharge is maintained by electrons emitted from a cathode. As for the electric current for generating the arc discharge, not only direct current but also alternating current can be used.

The arc discharge is advantageous in that the output can be easily increased by increasing the discharge current or discharge voltage, and that stable electric discharge can continue for a long period of time. Also, the arc discharge is advantageous in that the device and technique for generating the arc discharge are simple and the cost of equipment is relatively low.

In the case of generating a plasma in the plasma torch by using corona discharge, the electric power source 38 may supply either a pulsed DC voltage or a pulsed AC.voltage. As for the voltage applied between electrodes, a voltage of 1 to 100 kV and, for example, 5 to 20 kV, can be generally used. The pulse period of the applied voltage may be from 0.1 µs to 10 ms, particularly from 0.1 to 10 µs.

Incidentally, in view of stability of plasma and durability of electrode, it is preferred to perform barrier discharge by disposing an insulating material on the electrode.

### <Device for Supplying Fuel or Reducing Agent of the Present Invention Utilizing Inductively Coupled Plasma>

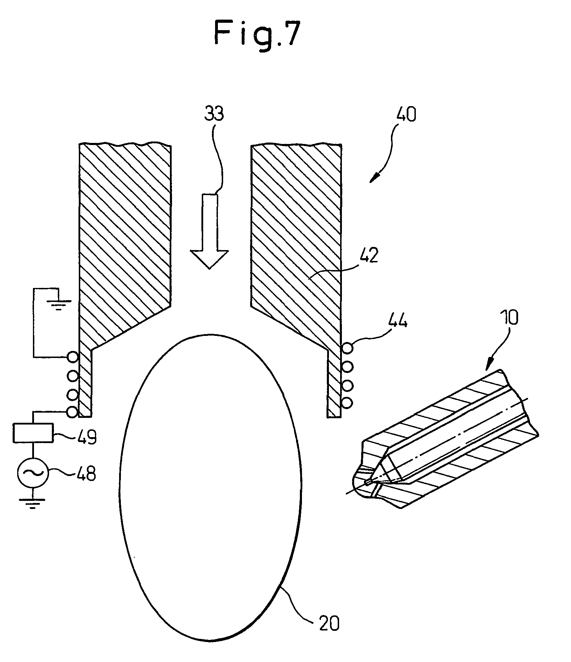

The device for supplying a fuel or a reducing agent of the present invention shown in Fig. 7 utilizes an inductively coupled plasma. In the plasma torch 40 used in the device for supplying a fuel or a reducing agent shown in Fig. 7, the distal end portion of a duct 42 for passing a gas to be converted into a plasma, such as nitrogen, is formed of an electromagnetic wave-transmitting material, for example, an insulating material such as quartz, and an induction coil 44 for generating an induced electric field is disposed in the periphery of the distal end portion. The induction coil is connected at one end to a high-frequency electric power source 48 through a matching box 49 and is grounded at another end.

In use of this device for supplying a fuel or a reducing agent, a high-frequency current is supplied from the high-frequency electric power source 48 to the induction coil 44 while adjusting the impedance by the matching box 49, as a result, inside the distal end portion of the duct 42, a magnetic field and then an eddy current are generated, whereby a plasma 20 is inductively generated in the duct 42 and in the vicinity thereof. As for the high-frequency current used here, for example, a current having a frequency of 2 to 50 MHz, particularly from 3 to 40 MHz, can be used.

This inductively coupled plasma is preferred in view of durability, because the electrode (metal portion) can be prevented from being directly exposed to a high-temperature plasma.

In the device for supplying a fuel or a reducing agent of the present invention utilizing an inductively-coupled plasma, similarly to the device for supplying a fuel or a reducing agent of the present invention utilizing a discharge plasma, the injection nozzle of an injector 10 for injecting a fuel or a reducing agent can be disposed in the plasma torch, and water can be further supplied to the region where a plasma is generated.

### <Device for Supplying Fuel or Reducing Agent of the Present Invention Utilizing Microwave Plasma>

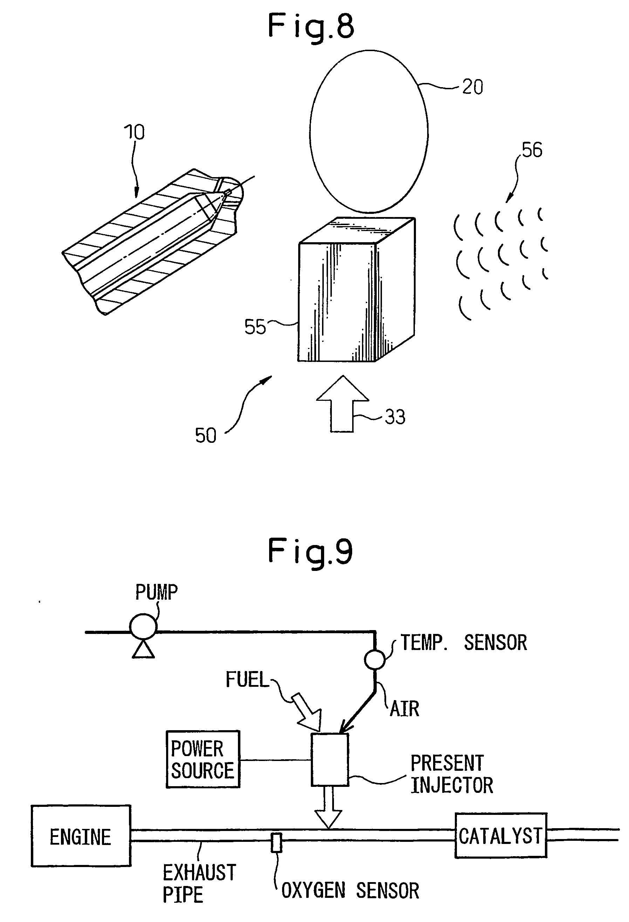

The plasma torch 50 shown in Fig. 8 generates a microwave plasma. In the plasma torch 50 shown in Fig. 8, a plasma-exciting material 55 is disposed in the duct for passing a gas to be converted into a plasma. The plasma-exciting material 55 accelerates excitation of a plasma in the periphery thereof upon receiving irradiation of a microwave. The plasma-exciting material is, for example, an electrically conducting ceramic, particularly, an electrically conducting ceramic sintered body such as SiC sintered body.

In use of this plasma torch 50, microwaves generated by a microwave generating device such as magnetron and, for example, microwaves at a frequency of about 2.54 GHz, are passed through a waveguide and irradiated from an antenna on a gas to be converted into a plasma, whereby the electric field strength is intensified and a plasma is generated.

Particularly, in the case of generating a microwave-induced plasma under an atmospheric pressure or a gas pressure higher than that, it is advantageous to use a plasma-exciting material 55 and generate a plasma in the periphery of the plasma-exciting material by irradiating microwaves onto the plasma-exciting material.

Use of a microwave plasma is preferred in view of durability, because the electrode (metal portion) can be prevented from being directly exposed to a high-temperature plasma.

In the device for supplying a fuel or a reducing agent of the present invention utilizing a microwave plasma, similarly to the device for supplying a fuel or a reducing agent of the present invention utilizing a discharge plasma, the injection nozzle of an injector 10 for injecting a fuel or a reducing agent can be disposed in the plasma torch, and water can be further supplied to the region where a plasma is generated.

### <Mechanism for Supplying Gas to Plasma Torch>

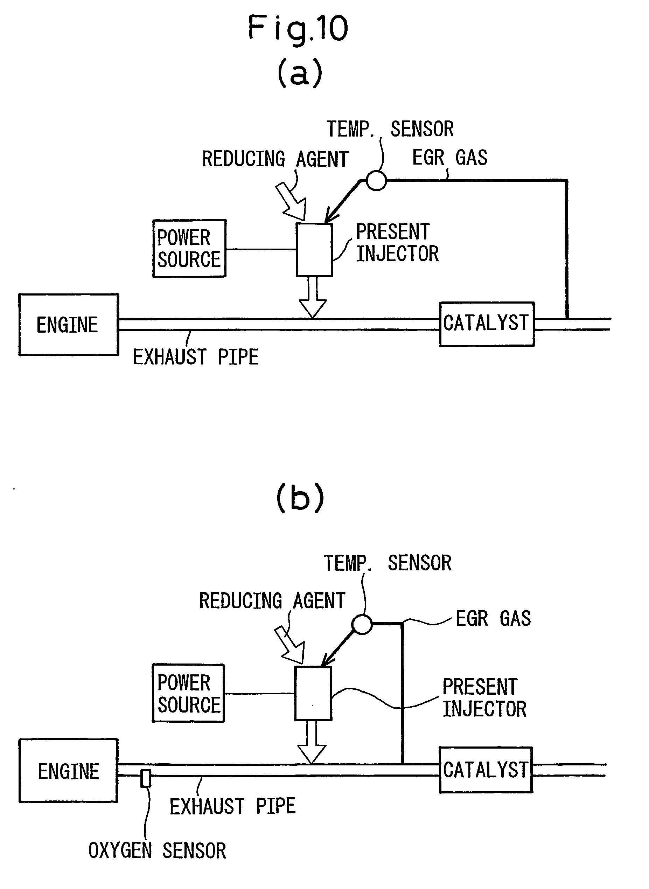

For supplying a gas to be converted into a plasma to the plasma torch, any mechanism can be used. For example, a gas to be converted into a plasma can be supplied from a tank storing such a gas. Also, in the case of supplying a reducing agent to an exhaust pipe, when the gas to be converted into a plasma is air, as shown in Fig. 9, which shows a comparative example not falling under the scope of the invention, the gas can be supplied from the surrounding environment by optionally using a pump. Furthermore, when the gas to be converted into a plasma is a recirculated exhaust gas, as shown in Figs. 10(a) and 10(b), the gas can be recirculated from the downstream side of an exhaust gas purifying catalyst such as NOₓ storage-reduction catalyst or NOₓ selective reduction catalyst, or from the upstream side of the exhaust gas purifying catalyst which is located downstream the plasma torch.

In the case of measuring the temperature of the gas to be converted into a plasma, as shown in Fig. 9 and Figs. 10(a) and 10(b), a temperature sensor may be disposed in the gas supply passage to the plasma torch. The gas temperature can also be measured by disposing a temperature sensor in the plasma torch itself.

In the case of measuring the oxygen concentration in the area whereto a fuel or a reducing agent is supplied, not only the oxygen concentration in the area itself is measured but also, as shown in Fig. 9 and Fig. 10(b), the oxygen concentration upstream the area can be measured.

### <Method for Supplying Fuel or Reducing Agent, and Plasma Torch of the Present Invention>

The method for supplying a fuel or a reducing agent and the plasma torch of the present invention are as described above with respect to the device for supplying a fuel or a reducing agent.

### <Direct Injection-Type Internal Combustion Engine>

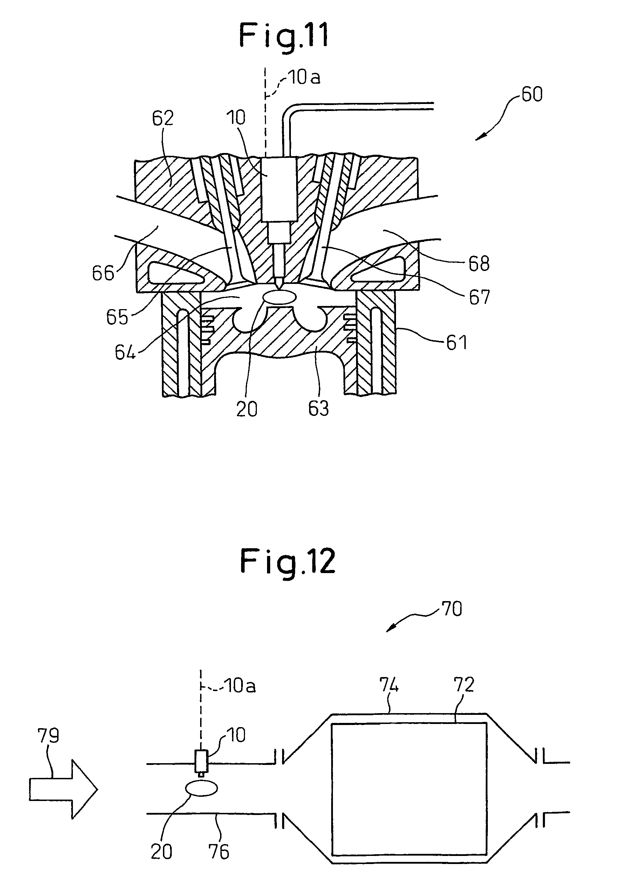

Fig. 11 shows a direct injection-type internal combustion engine where the device and method for supplying a fuel or a reducing agent and the plasma torch of the present invention can be used.

The direct injection-type internal combustion engine shown in Fig. 11 comprises an injector 10, a cylinder block 61, a cylinder head 62, a piston 63, a combustion chamber 64, an intake valve 65, an intake port 66, an exhaust valve 67 and an exhaust port 68. In this case, the fuel injection of the injector 10 is controlled through a control line 10a. In the direct injection-type internal combustion engine 60, a fuel commonly used for direct injection-type internal combustion engines, such as gasoline and light oil, can be injected.

When the device or method for supplying a fuel or a reducing agent or the plasma torch of the present invention is used for such a direct injection-type internal combustion, the fuel injected by the injector 10 can be converted into a low molecular weight component having high reactivity in the plasma region 20 and/or can be vaporized, so that the combustion of fuel in the combustion chamber and/or the mixing of fuel and air can be accelerated, and the emission of unburned fuel or the production of PM can be prevented.

The plasma 20 may be generated all the time, but in view of energy consumption, the plasma is preferably generated only at the moment of injecting a fuel, particularly, only at the moment of injecting a fuel at a low temperature as in the starting of the internal combustion engine.

### <Exhaust Gas Purifying System>

Fig. 12 shows an exhaust gas purifying system where the device and method for supplying a fuel or a reducing agent and the plasma torch of the present invention can be used.

The exhaust gas purifying system 70 shown in Fig. 12 comprises an injector 10, an exhaust pipe 76, a catalyst, particularly an NOₓ purifying catalyst 72 such as NOₓ storage-reduction catalyst or ₓ selective reduction catalyst, and a casing 74. The arrow 79 shows the exhaust gas flow direction. The injection of a reducing agent by the injector 10 is controlled through a control line 10a.

In this exhaust gas purifying system 70, not only a fuel used as the power source of an internal combustion engine, such as gasoline and light oil, can be injected as a reducing agent but also a separate reducing agent can be injected. The NOₓ purifying catalyst usable for the exhaust gas purifying system 70 is a catalyst of accelerating the reduction of NOₓ in an exhaust gas, particularly in an exhaust gas from an internal combustion engine.

When the device or method for supplying a fuel or a reducing agent or the plasma torch of the present invention is used for such an exhaust gas purifying system, the reducing agent injected by the injector 10 can be converted into a low molecular weight component having high reactivity in the plasma region 20 and/or can be vaporized, so that the diffusion of the reducing agent to the catalyst on the downstream side and the contact of the reducing agent with the catalyst can be promoted. This accelerates the reducing reaction on the catalyst and in turn, the unreacted reducing agent can be prevented from being released into the atmosphere. Also, when the catalyst used in this exhaust gas purifying system is an NOₓ purifying catalyst, particularly, NOₓ storage-reduction catalyst or NOₓ selective reduction catalyst, the NO₂ reducing reaction by the catalyst can be accelerated.

The plasma 20 may be generated all the time, but in view of energy consumption, the plasma is preferably generated only at the moment of injecting a reducing agent and, particularly, only at the moment of injecting a reducing agent under the condition that the warm-up is still insufficient.

### <Plasma>

As generally known, "plasma" means a substance in the state that two or more freely moving positive and negative charged particles are present together. Accordingly, the substance in the plasma state has a high potential energy, and a fuel or a reducing agent can be converted through radical formation and cracking into a plasma to decompose into low molecular weight components having high reactivity. Furthermore, even when supplied in a liquid droplet state, the fuel or a reducing agent can be momentarily vaporized and through radical formation and cracking, converted into a low molecular weight component having high reactivity.

The plasma generated according to the present invention can take various modes. The present invention is not limited by the means for generating a plasma but, for example, a discharge plasma, a microwave plasma and an inductively coupled plasma can be used.

### <Cracking of Fuel or Reducing Agent by Plasma>

Considering the very high energy state of a plasma, it would be apparent to one skilled in the art that vaporization, radical formation and cracking of a fuel or a reducing agent can be momentarily performed by converting at least a part of the fuel or reducing agent into a plasma. However, in the following, cracking and the like caused by converting a hydrocarbon (C₁₃H₂₈) into a plasma is confirmed by an experiment.

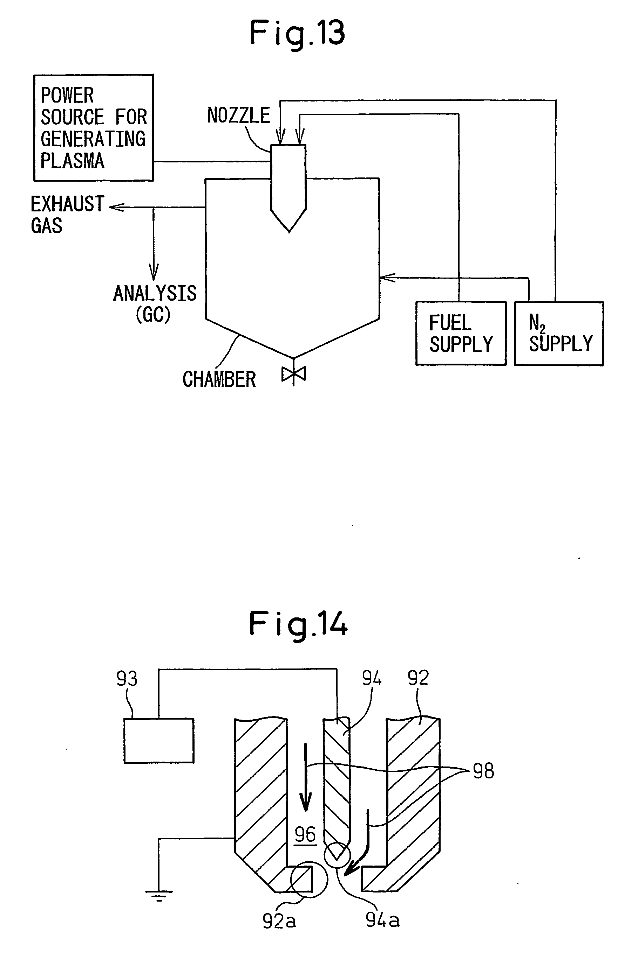

A testing device shown in Fig. 13 was used. In the experiment, a fuel (C₁₃H₂₈) from the fuel supply and N₂ as an example of a carrier gas from the N₂ supply were mixed and supplied to the chamber through the nozzle. In this experiment, it was observed that a discharge plasma was jetted out from the distal end of the nozzle. The N₂ from the N₂ supply was also directly supplied to the chamber. A part of the exhaust gas from the chamber was analyzed by a gas chromatograph.

Fig. 14 shows the nozzle used in this experiment for generating a plasma. The nozzle shown in Fig. 14 comprises a hollow cylindrical electrode 92 and a rod-like electrode 94 disposed on the central axis of the electrode. A gas flow path 96 is formed between these electrodes. The arrow 98 shows the gas flow passing through the gas flow path 96. In this nozzle, a voltage is applied between the hollow cylindrical electrode 92 and the rod-like electrode 94 disposed on the central axis thereof by an electric power source 93, whereby electric discharge is generated between the distal end part 92a of the hollow cylindrical electrode 92 and the distal end part 94a of the rod-like electrode 94. Incidentally, a glass pipe is disposed inside the cylindrical electrode to cause barrier discharge.

According to this experiment, C₁ to C₃ components were measured by gas chromatography only when a plasma was generated by electric discharge. This reveals that the plasma can crack a relatively large molecule (C₁₃H₂₈) into relatively small molecules (C₁ to C₃).

## Claims

1. A device for supplying a fuel or a reducing agent, wherein said device comprises
a plasma torch (30, 40, 50) for converting a gas supplied thereto into a plasma and jetting out the plasma, and
an injector (10) for injecting a fuel or a reducing agent to a plasma region (20) where said plasma is supplied;
wherein said plasma torch (30, 40, 50) generates said plasma region (20) in the vicinity of the injection port (19) of the injector (10), and **characterised in that**
said gas to be converted into a plasma is recirculated exhaust gas.

2. The device for supplying a fuel or a reducing agent according to claim 1, wherein plasma region is within 2 cm from the injection port of the injector.

3. The device for supplying a fuel or a reducing agent according to any one of claims 1 or 2, wherein the device comprises a water supplying means for supplying water to said plasma region where said plasma is supplied.

4. The device for supplying a fuel or a reducing agent according to any one of claims 1 to 3, wherein said plasma torch and said injector are separated.

5. The device for supplying a fuel or a reducing agent according to any one of claims 1 to 4, wherein the injection nozzle of said injector is disposed in said plasma torch, and said gas to be converted into a plasma is passed to flow between the inner wall of said plasma torch and the injection nozzle of said injector.

6. A direct injection-type internal combustion engine, wherein a fuel is directly injected to a combustion chamber of the engine by the device for supplying a fuel or a reducing agent according to any one of claims 1 to 5.

7. An exhaust gas purifying system comprising a catalyst in an exhaust pipe, wherein a reducing agent is injected upstream of the catalyst by the device for supplying a fuel or a reducing agent according to any one of claims 1 to 6.

8. A method for supplying a fuel or a reducing agent with use of a plasma torch (30, 40, 50) and an injector (10), wherein said method comprises converting recirculated exhaust gas into a plasma and blowing out the plasma by said plasma torch (30, 40, 50) such that a plasma region (20) is generated in the vicinity of the injection port (19) of the injector (10), and injecting a fuel or a reducing agent into said plasma region (20) by said injector (10).

9. The method for supplying a fuel or a reducing agent according to claim 8, wherein said plasma is a discharge plasma, and wherein, when said gas to be converted into a plasma is below a predetermined temperature, said gas in not converted into a plasma in said plasma torch.

10. The method for supplying a fuel or a reducing agent according to claim 8 or 9, wherein, when the oxygen concentration in the area where said fuel or reducing agent is supplied exceeds a predetermined concentration, the discharging is not performed and the gas is not converted into a plasma in the plasma torch.

## Patentansprüche

1. Vorrichtung zum Zuführen eines Kraftstoffs oder eines Reduktionsmittels, wobei die Vorrichtung umfasst:
einen Plasmabrenner (30, 40, 50), zum Umwandeln eines dazu zugeführten Gases in ein Plasma und Ausstoßen des Plasmas, und
eine Einspritzvorrichtung (10) zum Einspritzen eines Kraftstoffs oder eines Reduktionsmittels zu einem Plasmabereich (20), zu dem das Plasma zugeführt wird;
wobei der Plasmabrenner (30, 40, 50) den Plasmabereich in der Nähe der Einspritzöffnung (19) der Einspritzvorrichtung (10) erzeugt, und **dadurch gekennzeichnet, dass**
das in ein Plasma umzuwandelnde Gas ein rezirkuliertes Abgas ist.

2. Vorrichtung zum Zuführen eines Kraftstoffs oder eines Reduktionsmittels nach Anspruch 1, wobei der Plasmabereich sich innerhalb von zwei cm von der Einspritzöffnung der Einspritzvorrichtung befindet.

3. Vorrichtung zum Zuführen eines Kraftstoffs oder eines Reduktionsmittels nach einem der Ansprüche 1 oder 2, wobei die Vorrichtung ein Wasserzufuhrmittel zum Zuführen von Wasser zu dem Plasmabereich umfasst, zu dem das Plasma zugeführt wird.

4. Vorrichtung zum Zuführen eines Kraftstoffs oder eines Reduktionsmittels nach einem der Ansprüche 1 bis 3, wobei der Plasmabrenner und die Einspritzvorrichtung getrennt sind.

5. Vorrichtung zum Zuführen eines Kraftstoffs oder eines Reduktionsmittels nach einem der Ansprüche 1 bis 4, wobei die Einspritzdüse des Einspritzers in dem Plasmabrenner angeordnet ist, und das in ein Plasma umzuwandelnde Gas, um zu strömen, zwischen der Innenwand des Plasmabrenners und der Einspritzdüse der Einspritzvorrichtung durchgeführt wird.

6. Brennkraftmaschine der Art mit Direkteinspritzung, wobei ein Kraftstoff durch die Vorrichtung zum Zuführen eines Kraftstoffs oder eines Reduktionsmittels gemäß einem der Ansprüche 1 bis 5 direkt in eine Brennkammer der Maschine eingespritzt wird.

7. Abgasreinigungssystem mit einem Katalysator in einem Abgasrohr, wobei ein Reduktionsmittel stromaufwärts des Katalysators durch die Vorrichtung zum Zuführen eines Kraftstoffs oder eines Reduktionsmittels gemäß einem der Ansprüche 1 bis 6 eingespritzt wird.

8. Verfahren zum Zuführen eines Kraftstoffs oder eines Reduktionsmittels mit Verwendung eines Plasmabrenners (30, 40, 50) und einer Einspritzvorrichtung (10), wobei das Verfahren umfasst: das Umwandeln des rezirkulierten Abgases in ein Plasma und Ausblasen des Plasmas durch den Plasmabrenner (30, 40, 50) derart, dass ein Plasmabereich (20) in der Nähe der Einspritzöffnung (19) der Einspritzvorrichtung (10) erzeugt wird, um das Einspritzen eines Kraftstoffs oder eines Reduktionsmittels in dem Plasmabereich (20) durch die Einspritzvorrichtung (10).

9. Verfahren zum Zuführen eines Kraftstoffs oder eines Reduktionsmittels nach Anspruch 8, wobei das Plasma ein abgegebenes Plasma ist und wobei, wenn das in ein Plasma umzuwandelnde Gas unter einer vorbestimmten Temperatur liegt, das Abgeben nicht durchgeführt wird und das Gas in dem Plasmabrenner nicht in ein Plasma umgewandelt wird.

10. Verfahren zum Zuführen eines Kraftstoffs oder eines Reduktionsmittels nach Anspruch 8 oder 9, wobei, wenn die Sauerstoffkonzentration in dem Bereich, in dem der Kraftstoff oder das Reduktionsmittel zugeführt wird, eine vorbestimmte Konzentration übersteigt, die Abgabe nicht durchgeführt wird, und das Gas in dem Plasmabrenner nicht in ein Plasma umgewandelt wird.

## Revendications

1. Dispositif pour alimenter un combustible ou un agent réducteur, dans lequel ledit dispositif comprend
une torche à plasma (30, 40, 50) pour convertir un gaz qui lui est fourni en un plasma et éjecter le plasma, et
un injecteur (10) pour injecter un combustible ou un agent réducteur vers une région de plasma (20) où ledit plasma est alimenté ;
dans lequel ladite torche à plasma (30, 40, 50) génère ladite région de plasma (20) au voisinage de l'orifice d'injection (19) de l'injecteur (10), et **caractérisé en ce que**
ledit gaz destiné à être converti en un plasma est du gaz d'échappement remis en circulation.

2. Dispositif pour alimenter un combustible ou un agent de réduction selon la revendication 1, dans lequel la région de plasma est dans un rayon de 2 cm depuis l'orifice d'injection de l'injecteur.

3. Dispositif pour alimenter un combustible ou un agent de réduction selon la revendication 1 ou 2, dans lequel le dispositif comprend des moyens d'alimentation en eau pour alimenter de l'eau vers ladite région de plasma où ledit plasma est alimenté.

4. Dispositif pour alimenter un combustible ou un agent de réduction selon l'une quelconque des revendications 1 à 3, dans lequel ladite torche à plasma et ledit injecteur sont séparés.

5. Dispositif pour alimenter un combustible ou un agent de réduction selon l'une quelconque des revendications 1 à 4, dans lequel la buse d'injection dudit injecteur est disposée dans ladite torche à plasma, et ledit gaz destiné à être converti en plasma passe pour s'écouler entre la paroi intérieure de ladite torche à plasma et la buse d'injection dudit injecteur.

6. Moteur à combustion interne à injection directe, dans lequel un combustible est injecté directement dans une chambre de combustion du moteur par le dispositif pour alimenter un combustible ou un agent de réduction selon l'une quelconque des revendications 1 à 5.

7. Système de purification de gaz d'échappement comprenant un catalyseur dans un tuyau d'échappement, dans lequel un agent de réduction est injecté en amont du catalyseur par le dispositif pour alimenter un combustible ou un agent de réduction selon l'une quelconque des revendications 1 à 6.

8. Procédé pour alimenter un combustible ou un agent de réduction en utilisant une torche à plasma (30, 40, 50) et un injecteur (10), dans lequel ledit procédé comprend de convertir du gaz d'échappement remis en circulation en un plasma et de souffler au-dehors le plasma par ladite torche à plasma (30, 40, 50) de telle manière qu'une région de plasma (20) est générée au voisinage de l'orifice d'injection (19) de l'injecteur (10), et d'injecter un combustible ou un agent de réduction dans ladite région de plasma (20) par ledit injecteur (10).

9. Procédé pour alimenter un combustible ou un agent de réduction selon la revendication 8, dans lequel ledit plasma est un plasma de décharge, et dans lequel, quand ledit gaz destiné à être converti en un plasma est sous une température prédéterminée, la décharge n'est pas réalisée et ledit gaz n'est pas converti en un plasma dans ladite torche à plasma.

10. Procédé pour alimenter un combustible ou un agent de réduction selon la revendication 8 ou 9, dans lequel, quand la concentration en oxygène dans la zone où ledit combustible ou agent de réduction est alimenté dépasse une concentration prédéterminée, la décharge n'est pas réalisée et le gaz n'est pas converti en un plasma dans la torche à plasma.
